# FASCICULE DE BREVET EUROPEEN

(11) **EP 0 683 620 B1**
(45) Date de publication et mention de la délivrance du brevet: **12.06.2002**
(21) Numéro de dépôt: 95400720.9
(22) Date de dépôt: 31.03.1995
(51) Int. Cl.: H04Q 11/04, H04J 3/06

(54) **Procédé et dispositif de transmission de données asynchrone au moyen d'un bus synchrone**
Verfahren und Vorrichtung zur Übertragung von asynchronen Daten über einen synchronen Bus
Method and apparatus for transmission of asynchronous data over a synchronous bus

(30) Priorité: 20.05.1994 FR 9406298
(43) Date de publication de la demande: 22.11.1995
(73) Titulaire: THALES AVIONICS S.A., 78141 Vélizy Villacoublay Cédex (FR)
(72) Inventeur: Sannino, Christian, F-78125 Vieille Eglise (FR)
(74) Mandataire: de Saint-Palais, Arnaud Marie

(56) Documents cités:
- EP-A- 0 342 510
- EP-A- 0 433 154
- SCIENTIFIC HONEYWELLER, vol. 11, no. 1, 1991 MINNEAPOLIS US, pages 57-70, XP 000289742 K.HOYME,K.DRISCOLL,J.JERRLIN,K.RADKE 'ARINC 629 and SAFEbus: Data Buses for Commercial Aircraft'
- IEEE JOURNAL ON SELECTED AREAS IN COMMUNICATION, vol. 11, no. 2, Février 1993 NEW YORK US, pages 254-263, XP 000377943 T.MOORS,A.CANTONI 'ATM Receiver Implementation Issues'

## Description

La présente invention concerne un dispositif de transmission de données utilisant un bus série de transmission de données synchrone, tel que celui défini par la norme ARINC 659.

Elle s'applique notamment, mais non exclusivement, à la transmission de données numériques entre modules d'un équipement électronique embarqué à bord des aérodynes.

Un tel dispositif comprend généralement un bus de transmission de données et des coupleurs qui assurent chacun la connexion d'un module électronique avec le bus et contrôlent l'accès à ce dernier.

La norme ARINC 659 vise à spécifier une architecture de bus dit de "fond de panier" et de coupleur de bus utilisés dans les équipements électroniques embarqués à bord des aérodynes.

Selon cette norme, le bus comprend quatre bus série multiplexés redondants de transfert de données permettant de détecter et de corriger les erreurs de transmission. Les coupleurs présentent une architecture répartie en couches, dont une couche dite physique, une couche de liaison et une couche de transport qui assure la transmission d'informations par volumes importants.
Seules les couches physique et de liaison sont décrites par cette norme.

La couche physique qui regroupe les mécanismes de transmission et les mécanismes de synchronisation des horloges de chaque coupleur, exploite la redondance des bus de transmission de données, et présente ainsi une certaine tolérance aux fautes.
La couche de liaison assure l'accès au bus et la surveillance des opérations réalisées par la couche physique. Le principe d'accès repose essentiellement sur la connaissance à priori de chaque coupleur du trafic d'échange de données sur le bus.
Pour cela, l'échange de données est réalisé au moyen de trames de taille constante constituées chacune d'une suite de fenêtres temporelles de taille variable au cours desquelles chaque coupleur prend l'initiative d'émettre ou de recevoir un message. Cette initiative est prise par référence à une table associée à chaque coupleur et définie lors de la conception du dispositif. Cette table mentionne notamment le sens de l'échange, la taille de la fenêtre et la nature des données échangées dans cette fenêtre.
Cette architecture présente l'inconvénient de manquer de souplesse, car, lorsque l'on désire faire évoluer le système, et en particulier la nature des données échangées, il est nécessaire de revoir le contenu de chacune des tables associées aux coupleurs connectés au bus.

Par ailleurs, à l'heure actuelle, une nouvelle technique de transport asynchrone d'informations numériques a été mise en oeuvre pour exploiter les réseaux de télécommunication.

Cette technique appelée mode de transfert asynchrone (ATM) est basée sur la commutation de cellules de taille fixe. Selon ce mode de transmission, les cellules sont identifiées par un numéro de "canal virtuel" et non par leur position temporelle ou leur rang dans une trame périodique, comme c'est le cas pour un mode de transmission synchrone. Il n'y a donc aucun lien entre l'information contenue dans les cellules et le temps.

Ainsi, chaque cellule contient une entête dans laquelle figure le numéro de canal virtuel et un champ d'informations.

Ces cellules sont émises par multiplexage temporel sur les liaisons de transmission.

L'avantage fondamental de ce mode de transmission par rapport aux techniques synchrones réside dans la souplesse du multiplexage qui n'a pas de structure rigide, déterministe et liée à des débits quantifiés.

Par le brevet EP-A-0 433 154, on a par ailleurs proposé un dispositif de conversion synchrone/asynchrone permettant de transférer des informations entre une liaison synchrone et une liaison asynchrone.

La présente invention a quant à elle pour objet de combiner les avantages respectifs du bus synchrone spécifié par la nonne ARINC 659, et du mode de communication asynchrone par cellule de taille fixe.

A cet effet, elle propose un procédé de transfert de données numériques entre plusieurs abonnés connectés par l'intermédiaire de coupleurs respectifs à un bus, les données transmises étant réparties dans des trames temporelles de durée fixe, chaque trame étant divisée en cellules de durée fixe comprenant une entête destinée à recevoir notamment un code d'identification de message, ledit procédé comprenant :
- l'attribution aux abonnés de droits d'émission dans les cellules composant ladite trame,
- la synchronisation de tous les coupleurs d'abonnés entre eux,
- la composition par un abonné d'un message comprenant les données à émettre associées à un code d'identification du message, et rémission de ce message au cours d'une cellule attribuée à l'abonné,
- la réception par chaque coupleur d'abonné des messages contenus dans les cellules y compris ceux qui ne lui sont pas attribuées, l'analyse du code d'identification de chaque message reçu, et si ce code d'identification correspond à celui d'un message attendu par l'abonné, la transmission à l'abonné des données contenues dans ce message.

Selon l'invention, ce procédé est caractérisé en ce que le susdit bus comprend quatre bus redondants de transfert de données permettant de détecter et de corriger des erreurs de transmissions, en ce que les trames de durée fixe et subdivisées en cellules sont des trames mineures regroupées dans une trame majeure de durée fixe, chaque trame mineure comprenant un signal de synchronisation destiné à la synchronisation des coupleurs raccordés au bus et en ce que les cellules de la trame majeure sont attabuées aux abonnés au moyen d'une table d'émission propre à chaque coupleur indiquant pour chaque cellule de la trame majeure, si la cellule est attribuée ou non à l'abonné.

De cette manière, on conserve la tolérance aux pannes conférée par le bus ARINC 659, si bien que ce procédé présente une sécurité suffisante pour être applicable aux équipements électroniques embarqués à bords des aérodynes.

Par ailleurs, grâce à l'emploi de cellules de durée fixe, le contenu des tables associées à chaque coupleur et définies par la norme ARINC 659 a été simplifié de manière importante puisque, selon ce procédé, ces tables ne mentionnent plus, pour un abonné et pour chaque cellule, que le droit pour cet abonné d'émettre dans cette cellule. Pour construire ces tables, il suffit simplement de répartir les cellules de la trame, c'est-à-dire, la bande passante disponible, entre les abonnés. Ces tables, et par conséquent, les droits d'émission accordés à un abonné, ne devront être modifiées que lors d'une modification de la bande passante allouée à un abonné et lors d'une modification de la nature des données à transmettre.

Un mode de réalisation du procédé selon l'invention sera décrit ci-après, à titre d'exemple non limitatif, avec référence aux dessins annexés dans lesquels :
La figures 1 représente schématiquement l'architecture matérielle d'un coupleur de bus selon l'invention ;
La figure 2 montre la structure d'une cellule ;
La figure 3 représente la composition d'une trame ;
La figure 4 représente schématiquement l'architecture fonctionnelle du coupleur de bus.

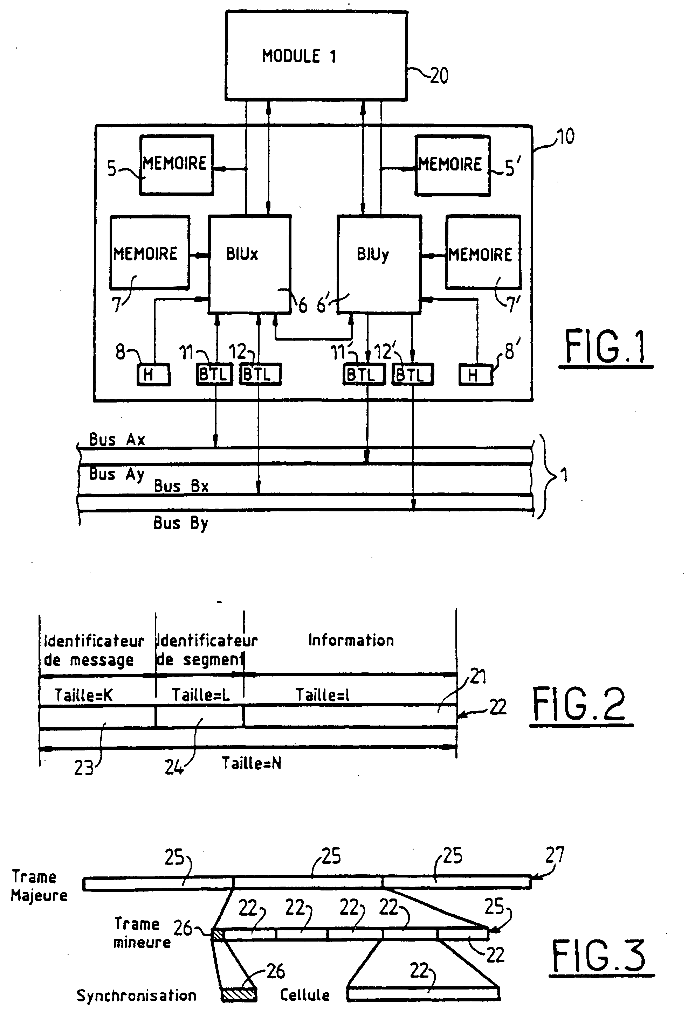

La figure 1 représente l'architecture matérielle d'un coupleur 10 assurant la connexion entre un équipement électronique 20 et un bus 1 de type ARINC 659.
Le bus 1 comprend quatre bus redondants Ax,Ay,Bx,By, constitués chacun de deux lignes séries multiplexées de transport de données et d'une ligne de transport de signaux d'horloge de synchronisation, les bits de donnée de rang pair et impair étant répartis respectivement sur chacune des deux lignes de transport de données de chaque bus redondant.
Cette structure de bus permet d'obtenir à la fois une grande sécurité dans le transfert des données et des vitesses importantes, par exemple 60 Mbits/s.

Sur ce bus 1 dit de fond de panier, sont raccordés des modules électroniques 20 par l'intermédiaire de coupleurs 10.

Un tel coupleur 10 présente également une structure redondante. Il comprend deux circuits d'interface de bus 6,6' raccordés chacun avec une mémoire 7,7', une horloge 8,8', et deux transmetteurs de bus 11,12 ou 11',12' qui assurent l'interface respectivement avec deux des quatre bus Ax,Ay,Bx,By. Ces deux circuits d'interface 6,6' sont interconnectés de manière à pouvoir assurer tous les contrôles de cohérence et les corrections d'erreurs permises par l'emploi de quatre bus redondants.

Par ailleurs, les deux circuits d'interface 6,6' sont connectés chacun au module 20 et à une mémoire 5,5' double accès, accessible également par le module électronique 20. Ils sont conçus de manière à ce que le temps d'utilisation du bus 1 soit partagé en cellules ou fenêtres temporelles de durée constante qui peuvent être attribuées aux différents utilisateurs du bus 1.

D'après la figure 2, une cellule 22 comprend un champ 21 réservé aux données, de taille I par exemple égale à 48 octets si l'on souhaite respecter le format des cellules ATM, une entête comportant notamment un code d'identification de message 23 de taille K et un code d'identification de segment 24 de taille L, L et K étant chacun égaux par exemple à 2 octets.

Afin que l'attribution des cellules aux différents modules 20 raccordés au bus 1 soit répétitive, les cellules sont réparties dans une trame de durée constante dans laquelle l'ordre d'attribution des cellules aux modules est invariable. Dans le but d'obtenir davantage de souplesse, on peut prévoir plusieurs trames contenant le même nombre de cellules mais dans lesquelles les cellules sont attribuées différemment aux modules 20.
Ainsi, sur la figure 3, ces cellules sont réparties dans des trames mineures 25 composées d'un nombre prédéterminé de cellules et d'une entête de synchronisation 26, les trames mineures étant elles-mêmes regroupées en trames majeures 27 de durée fixe.

L'entête de synchronisation 26 des trames mineures permet à chaque coupleur raccordé au bus 1 de synchroniser leur horloges 8,8' à celles des autres coupleurs et avec les signaux d'horloge transitant sur le bus de manière à pouvoir commencer une lecture ou une écriture sur le bus 1 exactement au début d'une cellule.

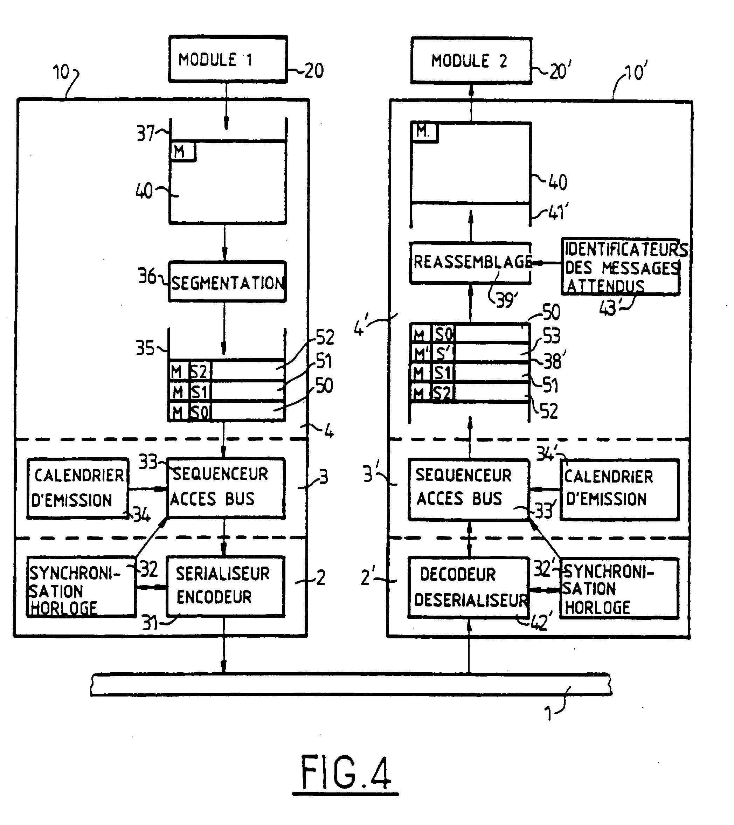

Du point de vue fonctionnel (figure 4), l'architecture d'un coupleur 10,10' peut se décomposer en trois couches, à savoir une couche physique 2,2' qui assure le transfert des informations entre le bus 1 et le coupleur 10,10', une couche liaison 3,3' et une couche transport 4,4' qui assure la liaison entre le coupleur 10 et un module électronique 20,20'.

Pour des besoins de clarté, seuls les éléments des coupleurs 10,10' servant soit à l'émission, soit à la réception de messages ont été représentés sur cette figure 4. Il va de soi que chaque coupleur 10,10' comporte à la fois les éléments servant à l'émission et à la réception.

En émission, la couche de transport 4 comprend une file d'attente 37, par exemple de type FIFO, accessible en écriture par le module 20 pour y transférer les messages 40 qu'il souhaite émettre vers un autre module 20'. Ces messages comprennent une entête contenant un code d'identification M afin de permettre au module destinataire 20' de le reconnaître. La file d'attente 37 est accessible en lecture par une unité de segmentation 36 dont le rôle est de segmenter les messages à émettre de taille quelconque en blocs de taille compatible avec celle des cellules. Cette unité récupère le code d'identification M du message 40 et associe à chaque bloc de donnée une entête contenant ce code d'identification, ainsi qu'un numéro de segment S0,S1,S2, de manière à constituer des segments 50 à 52 dont le format correspond à celui d'une cellule telle que représentée figure sur la 2. Ces segments 50 à 52 sont transférés dans l'ordre suivant lequel ils ont été constitués dans une deuxième file d'attente 35, également de type FIFO.

La couche de liaison 3 comprend un séquenceur 33 d'accès au bus qui, grâce à un calendrier d'émission 34 contenu dans la mémoire 5,5' est capable de déterminer l'instant de démarrage sur le bus d'une cellule qui lui a été attribuée, c'est-à-dire, dans laquelle il a le droit d'émettre un segment. Ce calendrier réunit ainsi l'ensemble des droits d'émission attribués à un module.
Ce calendrier comprend une suite de bits dont le nombre correspond au nombre de cellules 22 dans chaque trame mineure 25 multiplié par le nombre de trames mineures 25 dans chaque trame majeure 27, les bits à 1 indiquant par exemple, que la cellule correspondante à été attribuée au module 20.
Lorsque le séquenceur 33 détecte sur le bus une cellule qui lui a été attribuée, il transfère le premier segment 50 de la file d'attente 35 vers la couche physique 2 du coupleur 10.

Au niveau de la couche physique 2, les segments 50 à 52 en provenance de la couche liaison 3 sont traités par un convertisseur parallèle/série-encodeur 31 qui convertit le segment à émettre suivant un format série compatible avec les spécifications du bus 1, et l'applique sur ce dernier.

Par ailleurs, la couche physique 2 comprend un circuit de synchronisation 32,32' qui capte les tops de synchronisation trame 26 circulant sur le bus 1 et les envoie au séquenceur d'accès 11 pour le synchroniser avec l'enchaînement des trames mineures qui circulent sur le bus 1.

En réception, cette couche physique 2' comprend un décodeur-convertisseur série/parallèle 42' qui capte, sur demande du séquenceur d'accès 33', tous les segments contenus dans les cellules qui transitent sur le bus, les décode et les envoie via une liaison parallèle au séquenceur d'accès 33'.

Au niveau de la couche de liaison 3', le séquenceur d'accès 33' commande la réception du contenu des cellules qui transitent sur le bus 1 en fonction du contenu du calendrier d'émission 34', c'est-à-dire, lorsque le coupleur 10' n'est pas en émission.

Tous les segments 50 à 53 de données reçus par le séquenceur d'accès 33' sont transférés au niveau de la couche transport 4', dans une troisième file d'attente 38' de même type que les autres. Cette file d'attente est vidée par une unité de réassemblage 39' des messages qui présente à la fois une fonction de tri des segments 50 à 53 de données reçus et une fonction de reconstitution des messages, tels qu'ils ont été transmis par le module émetteur 20 au coupleur associé 10.
Comme tous les segments transitant sur le bus 1 et qui n'ont pas été émis par le séquenceur 33', sont systématiquement transférés dans la file d'attente 38', il est nécessaire d'effectuer un tri et de rejeter tous les segments 53 dont le code d'identification M' contenu dans l'entête n'est pas reconnu. A cet effet, la mémoire 5,5' contient une liste 43' de tous les codes d'identification des messages attendus par le module 20'.

Les numéros de segments S0,S1,S2 contenus dans l'entête sont ensuite exploités par l'unité de réassemblage 39' pour reconstituer le message initial 40 auquel il ajoute le code d'identification M, et détecter éventuellement des segments manquants.
Le message 40 ainsi reconstitué est transféré dans une quatrième file d'attente 41' pour le mettre à la disposition du module 20' destinataire.

Les fonctions de segmentation 36, de réassemblage 39', de séquenceur d'accès 33,33', de décodage - conversion série/parallèle 42', et de conversion parallèle/série - encodage 31 sont regroupées dans chaque unité d'interface 6,6'. Par ailleurs, chaque mémoire 5,5' comprend le calendrier d'émission 34,34' et la liste 43' des codes d'identification des messages attendus. Cette mémoire 5,5' est accessible non seulement par l'unité d'interface 6,6' mais aussi par le module 20,20' pour pouvoir être mise à jour. Chaque mémoire 7,7' regroupe les files d'attente 37,41' contenant les messages 40 reçus ou à émettre et celles 35,38' contenant les segments 50 à 53 reçus ou à émettre.

Comme tous les éléments fonctionnels de cette architecture sont dupliqués pour retrouver l'architecture redondante montrée à la figure 1, les éléments actifs, tels que le séquenceur d'accès 33,33', échangent des signaux avec leur homologue pour effectuer tous les contrôles de cohérence des informations circulant sur les quatre bus Ax,Ay,Bx,By, et les corrections d'erreurs, prévus dans la norme ARINC 659.

Avantageusement, le calendrier d'émission 34,34' indique pour chaque cellule 22 de la trame majeure 27 attribué au module, un niveau de priorité d'attribution : par exemple, 4,3,2 ou 1, une même cellule pouvant alors être attribuée à plusieurs modules avec des priorités différentes. De cette manière, si une cellule n'est pas utilisée par le module ayant une priorité supérieure, elle peut l'être par celui ayant une priorité inférieure.

Ce mécanisme permet de prendre en compte le cas des modules ayant peu de besoins en terme de bande passante mais ayant en revanche des messages devant être émis avec le minimum de latence.

## Revendications

1. Procédé de transfert de données numériques entre plusieurs abonnés connectés par l'intermédiaire de coupleurs respectifs à un bus, les données transmises étant réparties dans des trames temporelles de durée fixe,
chaque trame (25) étant divisée en cellules (22) de durée fixe comprenant une zone destinée à recevoir un code d'identification (23) de message, ledit procédé comprenant :
- l'attribution aux abonnés de droits d'émission dans les cellules composant ladite trame (25),
- la synchronisation de tous les coupleurs (10, 10') d'abonnés,
- la composition par un abonné d'un message comprenant les données à émettre associées à un code d'identification du message, et rémission de ce message au cours d'une cellule (22) attribuée à l'abonné,
- la réception par chaque coupleur (10, 10') d'abonné des messages contenus dans les cellules y compris ceux qui ne lui sont pas attribuées, l'analyse du code d'identification (23) de chaque message reçu, et si ce code d'identification (23) correspond à celui d'un message attendu par l'abonné, la transmission du message à l'abonné,
**caractérisé en ce que** ledit procédé est mis en oeuvre par quatre bus redondants de transfert de données permettant de détecter et de corriger les erreurs de transmission, **en ce que** les trames (25) de durée fixe et subdivisées en cellules (22) sont des trames mineures regroupées dans une trame majeure (27) dé durée fixe, chaque trame mineure (25) comprenant un signal de synchronisation (26) destiné à la synchronisation des coupleurs (10, 10') raccordés au bus (1) et **en ce que** les cellules (22) de la trame majeure (27) sont attribuées aux abonnés au moyen d'une table d'émission (34, 34') propre à chaque coupleur indiquant pour chaque cellule (22) de la trame majeure (27), si la cellule est attribuée ou non à l'abonné.

2. Procédé selon la revendication 1,
**caractérisé en ce que** chaque cellule (22) comprend une entête destinée à recevoir ledit code d'identification (23) de message et un numéro de segment (24), et une zone de données (21) réservée au transfert des données.

3. Procédé selon la revendication 2,
**caractérisé en ce qu'**il comprend:
- le découpage des données du message (40) à émettre par un abonné en blocs de taille égale à la taille de ladite zone de données (21), ces blocs étant numérotés (S0, S1, S2) consécutivement en fonction de leur position respective dans le message (40),
- l'association de chaque bloc de données à une entête contenant le code d'identification (M) du message (40) et son numéro (S0, S1, S2) pour constituer un segment au format correspondant à celui de chaque cellule (22), et l'émission de chaque segment sur le bus (1) dans les cellules attribuées à l'abonné,
- la reconstitution d'un message (40) à partir des segments transmis à l'abonné qui contiennent le même code d'identification (M), et desdits numéros de segment (S0, S1, S2), et la vérification que tous les segments permettant de reconstituer le message (40) ont été reçus.

4. Procédé selon la revendication 5,
**caractérisé en ce que** ladite table d'émission (34, 34') indique en outre un niveau de priorité pour chaque cellule (22) attribuée à l'abonné.

5. Dispositif pour la mise en oeuvre du procédé selon l'une des revendications précédentes,
dispositif dans lequel chaque coupleur (10, 10') assurant la connexion d'un module électronique (20, 20') au bus (1), présente une structure redondante comprenant deux unités d'interface (6, 6') de bus, chacune étant raccordée à deux paires (Ax, Bx et Ay, By) respectives de bus de transfert de données, ces unités d'interface (6, 6') étant interconnectées de manière à pouvoir effectuer des contrôles cohérence entre les signaux transitant sur lesdites paires de lignes et des corrections d'erreurs, chaque unité d'interface (6, 6') étant raccordée respectivement à une horloge (8, 8'), une première mémoire (7, 7), **caractérisé en ce que** cette unité d'interface (6, 6') est raccordée à une seconde mémoire (5, 5') contenant la table (34, 34') des cellules de la trame attribuées en émission au coupleur (10, 10') et une liste (43') des codes d'identification des messages attendus par le module (20,20').

6. Dispositif selon la revendication 5,
**caractérisé en ce que** ladite première mémoire (7, 7') comprend deux files d'attente (35, 38'), l'une contenant les segments à émettre sur le bus (1), tandis que l'autre contient les segments reçus.

7. Dispositif selon l'une des revendications 5 et 6,
**caractérisé en ce que** ladite première mémoire (7, 7') comprend deux autres files d'attente (37, 41'), l'une contenant les messages transmis par le module (20) à émettre sur le bus (1), tandis que l'autre contient les messages reçus et destinés au module (20').

8. Dispositif selon l'une des revendications 5 à 7,
**caractérisé en ce que** ladite seconde mémoire (5, 5') est accessible par le module (20) pour mettre à jour la table (34, 34') des cellules de la trame attribuées en émission au coupleur (10, 10') et la liste (43') des codes d'identification des messages attendus par le module (20,20').

## Patentansprüche

1. Verfahren für die Übertragung von digitalen Daten zwischen mehreren Teilnehmern, die anhand von jeweiligen Kopplern an einen Bus angeschlossen sind, wobei die übertragenen Daten auf zeitbezogene Frames mit fester Dauer verteilt werden,
und jeder Frame (25) in Zellen (22) mit fester Dauer unterteilt ist, die eine feste Zone für die Aufnahme eines Kenncodes (23) der Mitteilung beinhaltet, wobei sich das genannte Verfahren wie folgt zusammensetzt:
- Zuweisung von Senderechten für die Teilnehmer in den Zellen, aus denen sich der genannte Frame (25) zusammensetzt,
- Synchronisierung aller Koppler (10, 10') der Teilnehmer,
- Zusammensetzung einer Mitteilung durch einen Teilnehmer, die die zu versendenden Daten beinhaltet, in Verbindung mit einem Kenncode der Mitteilung und Absendung dieser Mitteilung im Laufe einer Zelle (22), die dem Teilnehmer zugeordnet worden ist,
- Empfang der Mitteilungen, die in den Zellen enthalten sind, durch alle Koppler (10, 10') der Teilnehmer, einschließlich derjenigen, die dem Koppler nicht zugeordnet sind, Analyse des Kenncodes (23) jeder erhaltenen Mitteilung, und - wenn der Kenncode (23) mit demjenigen einer Mitteilung übereinstimmt, die der Teilnehmer erwartet - Übertragung der Mitteilung an den Teilnehmer,
**dadurch gekennzeichnet, dass** das genannte Verfahren anhand von vier redundanten Datentransferbussen ausgeführt wird, mit denen sich Übertragungsfehler feststellen und korrigieren lassen, indem die Frames (25) mit feststehender Dauer und Unterteilung in Zellen (22) Unterframes sind, die in einem Oberframe (27) mit feststehender Dauer zusammengefasst werden, wobei jeder Unterframe (25) ein Synchronisationssignal (26) beinhaltet, das für die Synchronisation der Koppler (10, 10') bestimmt ist, die an den Bus (1) angeschlossen sind und die Zellen (22) des Oberframes (27) den Teilnehmern anhand einer Übertragungstabelle (34, 34') zugewiesen werden, die jedem Koppler speziell zugeordnet ist und für jede Zelle (22) des Oberframes (27) anzeigt, ob die Zelle dem Teilnehmer zugeordnet ist oder nicht.

2. Verfahren gemäß Patentanspruch 1,
**dadurch gekennzeichnet, dass** jede Zelle (22) einen Header beinhaltet, der für die Aufnahme des genannten Kenncodes (23) der Mitteilung und einer Segmentnummer (24) und einer Datenzone (21) für den Transfer von Daten vorgesehen ist.

3. Verfahren gemäß Patentanspruch 2,
**dadurch gekennzeichnet**, das es folgendes beinhaltet:
- die Unterteilung der Daten der von einem Teilnehmer abzusendenden Mitteilung (40) in Blöcke, deren Größe mit der Größe der genannten Datenzone (21) übereinstimmt, wobei diese Blöcke im Verhältnis zu ihrer jeweiligen Position innerhalb der Mitteilung (40) fortlaufend nummeriert sind (S0, S1, S2),
- die Zuordnung jedes Datenblocks zu einem Header, der den Kenncode (M) der Mitteilung (40) und seine Nummer (S0, S2, S2) enthält, um ein Segment entstehen zu lassen, dessen Format mit demjenigen jeder Zelle (22) übereinstimmt, und Absendung jedes Segments an den Bus (1) in den Zellen, die dem Teilnehmer zugeordnet sind,
- die Rekonstruktion einer Mitteilung (40) anhand der an den Teilnehmer übermittelten Segmente, die den gleichen Kenncode (M) enthalten, und anhand der genannten Segmentnummern (S0, S1, S2), und die Überprüfung, dass alle Segmente, die die Rekonstruktion der Mitteilung (40) ermöglichen, empfangen worden sind.

4. Verfahren gemäß Patentanspruch 5,
**dadurch gekennzeichnet, dass** die genannte Sendetabelle (34, 34') darüber hinaus für jede Zelle, (22), die dem Teilnehmer zugeordnet worden ist, ein Prioritätsniveau angibt.

5. Vorrichtung für die Anwendung des Verfahrens gemäß einem der vorangegangenen Patentansprüche,
Vorrichtung, bei der jeder Koppler (10, 10'), der die Verbindung eines elektronischen Moduls (20, 20') mit dem Bus (1) gewährleistet, eine redundante Struktur aufweist, die zwei Busschnittstelleneinheiten (6, 6') aufweist, von denen jede an zwei jeweilige Paare (Ax, Bx, und Ay, By) von Datentransferbussen angeschlossen ist, wobei diese Schnittstelleneinheiten (6, 6') so zusammengeschaltet sind, dass sich Kohärenzkontrollen zwischen den Signalen, die über die genannten Leitungspaare verlaufen, und Fehlerkorrekturen durchführen lassen, wobei jede Schnittstelleneinheit (6, 6') jeweils an einen Taktgeber (8, 8'), einen ersten Speicher (7, 7') angeschlossen ist, **dadurch gekennzeichnet, dass** diese Schnittstelleneinheit (6, 6') an einen zweiten Speicher (5, 5') angeschlossen ist, der die Tabelle (34, 34') der Zellen des Frames enthält, der dem Koppler (10, 10') zum Absenden zugeordnet ist, und eine Liste (43') der Kenncodes der Mitteilungen, die von dem Modul (20, 20') erwartet werden.

6. Vorrichtung gemäß Patentanspruch 5,
**dadurch gekennzeichnet, dass** der genannte erste Speicher (7, 7') zwei Warteschlangen (35, 38') enthält, wobei eine die an den Bus (1) abzusendenden Segmente und die andere die empfangenen Segmente enthält.

7. Vorrichtung gemäß einem der Patentansprüche 5 und 6,
**dadurch gekennzeichnet, dass** der genannte Speicher (7, 7') zwei weitere Wartschlangen (37, 41') enthält, wobei der eine die Mitteilungen enthält, die von dem Modul (20) übermittelt worden sind und an den Bus (1) abgeschickt werden sollen, während die andere die empfangenen Mitteilungen enthält, die für das Modul (20') bestimmt sind.

8. Vorrichtung gemäß einem der Patentansprüche 5 bis 7,
**dadurch gekennzeichnet, dass** der genannte zweite Speicher (5, 5') für das Modul (20) zugänglich ist, um die Tabelle (34, 34') der Zellen des Frames zu aktualisieren, das dem Koppler (10, 10') zum Senden zugeordnet ist, und die Liste (43') der Kenncodes der Mitteilungen, die von dem Modul (29, 20') erwartet werden.

## Claims

1. A method for transferring digital data between plural subscribers connected via respective couplers to a bus, the data transmitted being divided into time frames of fixed duration,
each frame (25) being divided into cells (22) of fixed duration comprising a zone intended to receive a message identification code (23), the method comprising:
- the attribution to the subscribers of transmission rights in the cells constituting the frame (25),
- the synchronizing of all the subscriber couplers (10, 10') with one another,
- the composing, by a subscriber, of a message comprising the data to be transmitted associated with a code identifying the message, and the transmission of this message during a cell (22) attributed to the subscriber,
- the reception by each subscriber coupler (10, 10') of the messages contained in the cells including those which are not attributed to him, the analysis of the identification code (23) of each received message, and, if this identification code (23) corresponds to that of a message expected by the subscriber, the transmission of the message to the subscriber,
**characterized in that** the method is implemented by four redundant data transfer buses enabling transmission errors to be detected and corrected, **in that** the frames (25) of fixed duration and sub-divided into cells (22) are minor frames grouped together into a major frame (27) of fixed duration, each minor frame (25) comprising a synchronizing signal (26) intended to synchronize the couplers (10, 10') connected to the bus (1) and **in that** cells (22) of the major frame (27) are attributed to the subscribers by means of a transmission table (34, 34') specific to each coupler indicating for each cell (22) of the major frame (27) whether or not the cell has been attributed to a subscriber.

2. The method according to claim 1,
**characterised in that** each cell (22) comprises a header intended to receive the message identification code (23) and a segment number (24), and a data zone (21) reserved for the transfer of data.

3. The method according to claim 2,
**characterised in that** it comprises:
- the dividing of the data of the message (40) to be transmitted by a subscriber into blocks of size equal to the size of the data zone (21), the blocks being numbered (S0, S1, S2) consecutively as a function of their respective position in the message (40),
- the associating of each data block with a header containing the identification code (M) of the message (40) and its number (S0, S1, S2) in order to constitute a segment of format corresponding to that of each cell (22), and the transmission on the bus (1) of each segment in the cells attributed to the subscriber,
- the reconstituting of a message (40) from the segments transmitted to the subscriber and containing the same identification code (M), and the segment numbers (S0, S1, S2), and the checking that all the segments enabling the message (40) to be reconstituted have been received.

4. The method according to claim 5,
**characterised in that** the transmission table (34, 34') also indicates a level of priority for each cell (22) attributed to the subscriber.

5. A device for implementing the method according to one of the preceding claims,
device in wich each coupler (10, 10') connecting an electronic module (20, 20') to the bus (1) has a redundant structure comprising two bus interfacing units (6, 6'), each being connected to two respective pairs(Ax, Bx and Ay, By) of data transfer buses, these interfacing units ((6, 6') being interconnected so as to be able to check the consistency of the signals traveling on the pairs of lines and to correct any errors, each interfacing unit (6, 6') being respectively connected to a clock (8, 8'), a first memory (7, 7'), **characterized in that** this interfacing unit (6, 6') is connected to a second memory (5, 5') containing the table (34, 34') of the cells of the frame attributed for transmission to the coupler (10, 10'), and a list (43') of the message identification codes expected by the module (20, 20').

6. The device according to claim 5,
**characterized in that** the the first memory (7, 7') comprises two queues (35, 38'), one containing the segments to be transmitted on the bus (1), whereas the second contains the segments received.

7. The device according to one of the claims 5 and 6,
**characterized in that** the first memory (7, 7') comprises two other queues (37, 41'), one containing the messages transmitted by the module (20) to be transmitted on the bus (1), while the other contains the messages received and destined for the module (20').

8. The device according to one of the claims 5 to 7,
**characterized in that** the second memory (5, 5') can be accessed by the module (20) in order to update the table (34, 34') of frame cells attributed for transmission to the coupler (10, 10'), and the list (43') of message identification codes expected by the module (20, 20').
